# EUROPEAN PATENT APPLICATION

(11) **EP 1 302 362 A2**
(43) Date of publication of application: **16.04.2003**
(21) Application number: 02256925.5
(22) Date of filing: 07.10.2002
(51) Int. Cl.: B60N 2/28

(54) **Child safety seat**

(30) Priority: 16.10.2001 GB 0124785
(71) Applicant: Britax Excelsior Limited, Warwick CV34 6DE (GB)
(72) Inventor: Beaumont, Andrew Patrick, Basingstoke, Hampshire RG22 4YJ (GB); Lovie, David, deceased (GB)
(74) Representative: Hollinghurst, Antony

(57) **Abstract**

A child safety seat comprising a seat body (10) and a base (30) having the seat body (10) mounted thereon. The base (30) includes a bottom surface (32) adapted to rest on a vehicle seat, an abutment member (38) adapted to abut against the vehicle seat back, and a respective lateral belt guide (47, 48) on each side of the base (30) located above said bottom surface (32) and in front of said abutment member (38). At least one of the lateral belt guides comprises an open-ended slot (47) in the side of the base (30) and means (60) for varying the depth of the slot (47).

## Description

This invention relates to a child safety seat of the type comprising a base having a bottom surface adapted to rest on a vehicle seat, a seat body mounted on the base, and an abutment member adapted to abut against the vehicle seat back, wherein the base has a respective lateral belt guide on each side thereof located above said bottom surface and in front of said abutment member.

When the seat body is mounted on the base so as to face rearwardly and the seat is to be secured on the seat using a seat belt with a shoulder strap, the shoulder strap of the vehicle seat belt extends round the backrest of the seat body, which is the part of the seat body closest to the front of the vehicle. This takes a substantial length of seat belt webbing. In addition, it is necessary for at least one of the lateral belt guides to be positioned at a sufficient distance from the bight between the seat cushion and the backrest of the vehicle seat to accommodate the vehicle seat belt buckle, particularly if the vehicle seat belt has a relatively long buckle. It is customary for both lateral belt guides to be positioned in this relatively forward position so as to enable the child seat to be used on both sides of the rear seat of a motor vehicle. This also takes a significant length of seat belt webbing.

In some motor vehicles, the vehicle seat belts are not long enough for this type of installation. An object of the invention is to provide a child safety seat of this type in which the required length of the vehicle seat belt is reduced.

Although particularly advantages for use with vehicle seat belts having a shoulder strap, the invention is also applicable to vehicle seat belts having only a lap strap.

According to the invention, in a child safety seat of the type described above, the position on the base of at least one of the lateral belt guides is adjustable.

Preferably, the adjustable lateral belt guide comprises an open-ended slot in the side of the base and means for varying the depth of the slot.

The base member may be provided with an auxiliary belt guide located between the lateral belt guides and adapted to deflect the vehicle seat belt from a direct path between the lateral belt guides so as to be closer to the bottom surface and/or the abutment member. The provision of such an auxiliary belt guide is particularly desirable when the invention is applied to a child safety seat of the type in which the seat body is detachable from the base member. However, it can also be used with a seat in which the base is integral with the seat body.

Preferably, adjustable lateral belt guides are provided on both sides of the base.

The invention can be used with both forward facing seats and rearward facing seats.

An embodiment of the invention will now be described, by way of example, with reference to the accompanying drawings in which,
Figure 1 is a side view of the seat body of a child safety seat in accordance the invention;
Figure 2 is a rear view of the seat body shown in Figure 1;
Figure 3 is a perspective view of a base for use with the seat body shown in Figures 1 and 2;
Figure 4 is a side view of the seat body of Figures 1 and 2 positioned on the base of Figure 3 with an adjustable belt guide set to provide the maximum accommodation for the buckle of the vehicle seat belt;
Figure 5 is a side view, similar to Figure 4, but with the belt guide set to an intermediate position; and
Figure 6 is a side view, similar to Figures 4 and 5, but showing the belt guide set to provide minimum accommodation for vehicle seat belt buckle.

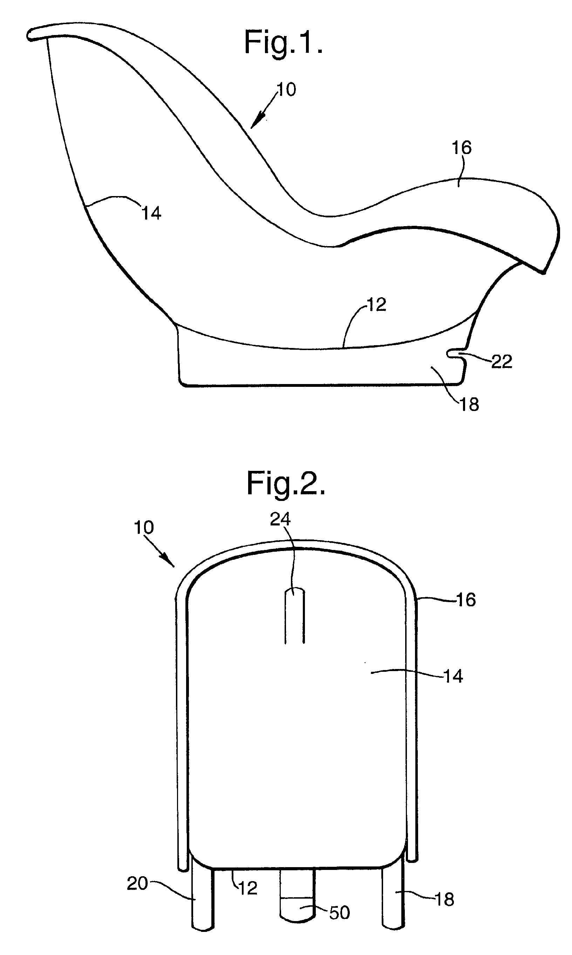

Figure 1 shows a child seat body 10 formed as a one-piece plastics body and having a seat portion 12, a backrest portion 14 and a flange 16 extending round its edge. Two ribs 18 and 20 project downwardly from the outer edges of the seat portion 12 and each has a notch 22 in its end further from the backrest 14. The backrest 14 has a shoulder belt guide 24 for the shoulder belt of a vehicle seat belt, as described in EP-A-0168966.

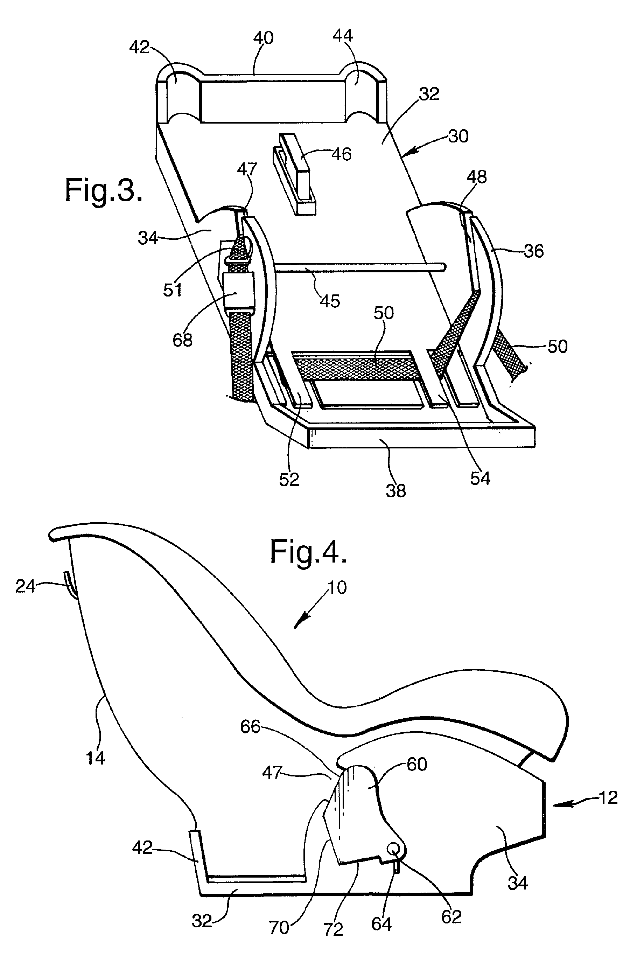

Figure 3 shows a base 30 for use with the seat body 10. The base 30 has a bottom panel 32 adapted to rest on a vehicle seat. The base 30 has a pair of semi-circular side walls 34 and 36 between which extends an abutment member 38 for abutment against the seat back of a vehicle seat. At the opposite end to the abutment member 38, a wall 40 extends upwardly from the bottom panel 32 and has two semi-cylindrical recesses 42 and 44. A rod 46 extends between the semi-circular walls 34 and 36.

When the seat body 10 is placed on the base 30 with the notches 22 engaging round the rod 46, the opposite ends of the ribs 18 and 20 are received in the recesses 42 and 44. A latch 48, which is spring-biassed towards the wall 40, engages with a complimentary formation 50 on the under surface of the seat portion 12 of the seat body 10 to retain the seat body in place.

Each of the side walls 34 and 36 contains a respective open-ended slot 46, 48 for receiving the lap strap 50 of a vehicle seat belt. An auxiliary belt guide, in the form of two fingers 52 and 54, guides a central portion of the lap belt 50 into close proximity to the bottom panel 32 so as to be clear of the bottom of the seat body 10 when the latter is placed on the base.

Referring to Figure 4, an adjuster plate 60 is mounted on the outside of the semi-circular wall 34 by means of a pivot pin 62. A spring-biassed detent 64 engages with complimentary formations (not shown) on the adjuster plate 60 so as to enable the latter to be secured in the position shown in Figures 3 and 4 and also in the two alternative positions shown in Figures and 6.

When the adjuster plate 60 is in the position shown in Figures 3 and 4, the lap belt 50 engages with an edge 66 thereof which is positioned relatively close to the mouth of the slot 46 and therefore provides the maximum amount of space for accommodating a vehicle seat belt buckle 68.

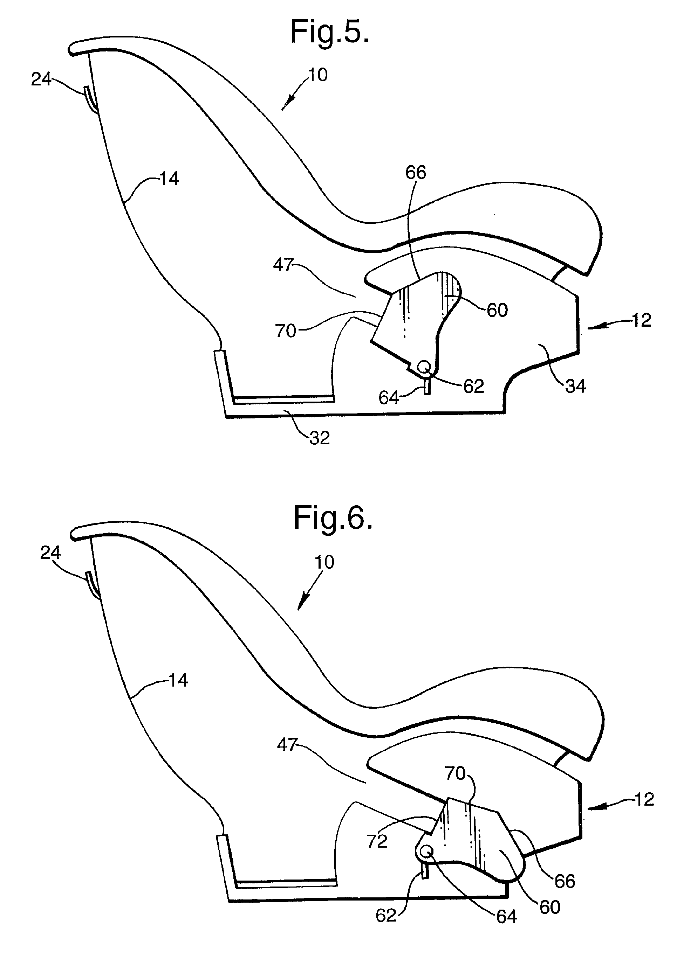

If the adjuster plate 60 is pivoted to the position shown in Figure 5, the edge 70 thereof lies across the slot 46, allowing less space for the buckle 68 but taking up a shorter length of the vehicle seat belt. The minimum length is taken up when the adjuster plate is turned to the position shown in the slot 46 in which the edge 72 thereof lies across the slot 46.

A similar adjuster plate (not shown) is provided on the outside of the other semi-circular wall 36 so as to vary the effective length of the slot 48.

In use, the base 30 is positioned on a vehicle seat. The adjuster plate 60 on the side of the seat where the vehicle seat belt buckle is located is set in a position appropriate to the configuration of such vehicle seat belts so as to leave adequate space for the buckle but without providing more space than is necessary. Thew other adjuster plate is set to the position shown in Figure 6. The lap strap of the vehicle seat belt is then positioned in the slots 46 and 48 and the central portion engages under the fingers 52 and 54. Next, the seat body 10 is positioned on the base 30 as described above. Finally, the shoulder strap of the vehicle belt is pulled round the outside of the backrest 14 of the seat body and engaged in the belt guide 24.

## Claims

1. A child safety seat comprising a base having a bottom surface adapted to rest on a vehicle seat, a seat body mounted on the base, and an abutment member adapted to abut against the vehicle seat back, wherein the base has a respective lateral belt guide on each side thereof located above said bottom surface and in front of said abutment member, the position on the base of at least one of the lateral belt guides being adjustable.

2. A child safety seat according to claim 1, wherein the adjustable lateral belt guide comprises an open-ended slot in the side of the base and means for, varying the depth of the slot.

3. A child safety seat according to claim 1 or 2, having an auxiliary belt guide located between the lateral belt guides and adapted to deflect the vehicle seat belt from a direct path between the lateral belt guides so as to be closer to the bottom surface and/or the abutment member.

4. A child safety seat according to claim 1, 2 or 3, wherein adjustable lateral belt guides are provided on both sides of the base.

5. A child safety seat according to claim 1, 2, 3 or 4, wherein the seat body is detachable from the base.

6. A child safety seat according to claim 1, 2, 3 or 4, wherein the seat body is integral with the base.

7. A child safety seat, substantially as hereinbefore described with reference to the accompanying drawings.
